# EUROPEAN PATENT SPECIFICATION

(11) **EP 1 070 096 B1**
(45) Date of publication and mention of the grant of the patent: **19.07.2006**
(21) Application number: 99911249.3
(22) Date of filing: 08.03.1999
(51) Int. Cl.: C08K 3/00, C08L 67/04, C08L 71/00

(54) **USE IN A HOT MELT ADHESIVE OF A POLYMER COMPOSITE COMPRISING A HYDROXY-FUNCTIONALIZED POLYETHER AND AN INORGANIC FILLER**
VERWENDUNG EINES POLYMERVERBUNDES ENTHALTEND EINEN HYDROXY-FUNKTIONALISIERTEN POLYETHER UND EINEN ANORGANISCHEN FÜLLSTOFF IN EINEM SCHMELZKLEBSTOFF
UTILISATION D'UN COMPOSITE POLYMERE COMPRENANT UN POLYETHER A FONCTION HYDROXY ET UNE CHARGE INORGANIQUE DANS UNE COLLE A FUSION

(30) Priority: 20.03.1998 US 45300
(43) Date of publication of application: 24.01.2001
(73) Proprietor: DOW GLOBAL TECHNOLOGIES INC., Midland, Michigan 48674 (US)
(72) Inventor: CHEUNG, C., Alice, Lake Jackson, TX 77566 (US); POLANSKY, Christine, A., Brazoria, TX 77422 (US); WHITE, Jerry, E., Lake Jackson, TX 77566 (US)
(74) Representative: Raynor, John
(86) International application number: PCT/US1999/005149
(87) International publication number: WO 1999/048962

(56) References cited:
- EP-A- 0 301 878
- EP-A- 0 513 679
- DE-A- 19 537 013
- US-A- 4 536 425
- US-A- 5 149 768
- DATABASE WPI Section Ch, Week 8907 Derwent Publications Ltd., London, GB; Class A12, AN 89-050185 XP002107196 & JP 01 006061 A (TOTO KASEI KK) , 10 January 1989
- DATABASE WPI Section Ch, Week 9427 Derwent Publications Ltd., London, GB; Class A23, AN 94-222161 XP002107197 & JP 06 157878 A (MITSUBISHI KASEI CORP) , 7 June 1994
- "Encyclopedia of Polymer Science and Engineering, vol.2, 1985,p.176-179"

## Description

The present invention relates to a polymer composite comprising a polymer and an inorganic additive, and to a method for preparing the polymer composite.

Polymer composites comprising a polymer matrix having one or more additives, such as a particulate or fiber material dispersed throughout the continuous polymer matrix, are well known. The additive is often added to enhance one or more properties of the polymer.

In one aspect, the present invention is the use in a hot-melt adhesive of a polymer composite comprising a hydroxy-functionalized polyether and an inorganic filler, wherein the polyether is as defined below.

In a preferred embodiment, the polymer is a melt processible, thermoplastic hydroxy-functionalized polyether.

The polymer composites of this invention can exhibit an excellent balance of properties and can exhibit one or more superior properties such as improved heat or chemical resistance, ignition resistance, superior resistance to diffusion of polar liquids and of gases, yield strength in the presence of polar solvents such as water, methanol, or ethanol, or enhanced stiffness and dimensional stability, as compared to polymers which do not contain an inorganic filler.

The polymer matrix of the polymer composite comprises the following hydroxy-functionalized polyether :
(1) polyetheramines having repeating units represented by the formula: 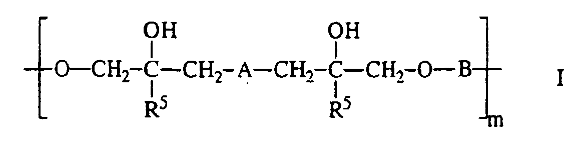 or
(2) hydroxy-phenoxyether polymers having repeating units represented by the formula: 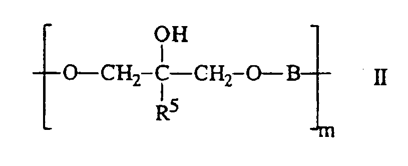 R⁵ is hydrogen or alkyl; A is an amine moiety or a combination of different amine moieties; B is a divalent organic moiety which is hydrocarbon; m is an integer from 5 to 1000.

In the preferred embodiment of the present invention, A is 2-hydroxyethylimino-, 2-hydroxypropylimino-, piperazenyl, N,N'-bis(2-hydroxyethyl)-1,2-ethylenediimino; and B and R¹ are independently 1,3-phenylene, 1,4-phenylene; sulfonyldiphenylene, oxydiphenylene, thiodiphenylene or isopropylidene-diphenylene; R⁵ is hydrogen; R⁷ and R⁹ are independently methyl, ethyl, propyl, butyl, 2-hydroxyethyl or phenyl; and B and R"are independently 1,3-phenylene, 1,4-phenylene, sulfonyldiphenylene, oxydiphenylene, thiodiphenylene or isopropylidenediphenylene.

The polyetheramines represented by Formula I are prepared by contacting one or more of the diglycidyl ethers of a dihydric phenol with an amine having two amine hydrogens under conditions sufficient to cause the amine moieties to react with epoxy moieties to form a polymer backbone having amine linkages, ether linkages and pendant hydroxyl moieties. These polyetheramines are described in U.S. Patent 5,275,853. The polyetheramines can also be prepared by contacting a diglycidyl ether or an epihalohydrin with a difunctional amine.

The hydroxy-phenoxyether polymers represented by Formula II are prepared, for example, by contacting an epihalohydrin or a diglycidyl ether with a bisphenol. These polymers are described in U.S. Patent 5,496,910.

Inorganic fillers which can be employed in the practice of the present invention for preparing the polymer composite include talc, mica and additional members of the clay mineral family such as montmorillonite, hectorite, kaolinite, dickite, nacrite, halloysite, saponite, nontronite, beidellite, volhonskoite, sauconite, magadiite, medmontite, kenyaite, vermiculite, serpentines, chlorites, palygorskite, kulkeite, aliettite, sepiolite, allophane and imogolite. In the practice of the present invention, naturally occurring members of the clay mineral family or synthetic members of the clay mineral family may be used. Mixtures of one or more such materials may also be employed.

Metal oxide, metal carbonate or metal hydroxide materials can also be used as fillers in the practice of the present invention. Such materials include calcium oxide, magnesium oxide, zirconium oxide, titanium oxide, manganese oxide, iron oxide, aluminum oxide, calcium hydroxide, magnesium hydroxide, zirconium hydroxide, aluminum hydroxide, manganese hydroxide, iron hydroxide, calcium carbonate, magnesium carbonate, manganese carbonate, iron carbonate or zirconium carbonate.

Metal nitride, metal carbide and metal boride materials such as aluminum nitride, silicon nitride, iron nitride, silicon carbide, manganese carbide, iron carbide, iron boride, aluminum boride, manganese boride or other materials used in the preparation of ceramic materials may also be used in the practice of the present invention for preparing the polymer composite. Aluminum oxide or aluminum hydroxide such as gibbsite, bayerite, nordstrandite, boehmite, diaspore and corundum may also be used as inorganic fillers in the practice of the present invention. Mixtures of one or more such materials may also be employed.

Preferred inorganic fillers are talc, mica, calcium carbonate and silica coated aluminum nitride (SCAN). Most preferred inorganic fillers are talc and mica.

In general, the composite of the present invention can be prepared by dispersing the inorganic filler in the monomer(s) which form the polymer matrix and the monomer(s) polymerized *in situ* or alternatively, can be dispersed in the hydroxy-phenoxyether or hydroxy-phenoxyester polymer, in melted or liquid form.

Melt-blending is one method for preparing the composites of the present invention. Techniques for melt-blending of a polymer with additives of all types are known in the art and can typically be used in the practice of this invention. Typically, in a melt-blending operation useful in the practice of the present invention, the hydroxy-phenoxy ether or hydroxy-phenoxy ester polymer is heated to a temperature sufficient to form a polymer melt and combined with the desired amount of the inorganic filler material in a suitable mixer, such as an extruder, a Banbury mixer, a Brabender mixer, or a continuous mixer. A physical mixture of the different components may also be heated simultaneously and blended using one of the previously mentioned methods.

In the practice of the present invention, the melt-blending is preferably carried out in the absence of air, as for example, in the presence of an inert gas, such as argon, neon, or nitrogen. However, the present invention may be practiced in the presence of air. The melt-blending operation can be conducted in a batch or discontinuous fashion but is more preferably conducted in a continuous fashion in one or more processing zones such as in an extruder from which air is largely or completely excluded. The extrusion can be conducted in one zone, or in a plurality of reaction zones which are in series or parallel.

A hydroxy-functionalized polyether or hydroxy-functionalized polyester melt containing the inorganic filler may also be formed by reactive melt processing in which the inorganic filler is initially dispersed in a liquid or solid monomer or cross-linking agent which will form or be used to form the polymer matrix of the composite. This dispersion can be injected into a polymer melt containing one or more polymers in an extruder or other mixing device. The injected liquid may result in new polymer or in chain extension, grafting or even cross-linking of the polymer initially in the melt.

Methods for preparing a polymer composite using *in situ* type polymerization are also known in the art and reference is made thereto for the purposes of this invention. In applying this technique to the practice of the present invention, the composite is formed by mixing monomers and/or oligomers with the inorganic filler in the presence or absence of a solvent and subsequently polymerizing the monomer and/or oligomers to form the hydroxy-phenoxyether polymer matrix of the composite. After polymerization, any solvent that is used is removed by conventional means.

Alternatively, the polymer may be granulated and dry-mixed with the inorganic filler, and thereafter, the composition heated in a mixer until the hydroxy-phenoxyether polymer is melted to form a flowable mixture. This flowable mixture can then be subjected to a shear in a mixer sufficient to form the desired composite. The polymer may also be heated in the mixer to form a flowable mixture prior to the addition of the inorganic filler. The inorganic filler and polymer are then subjected to a shear sufficient to form the desired composite.

The amount of the inorganic filler most advantageously incorporated into the hydroxy-functionalized polyether or hydroxy-functionalized polyester is dependent on a variety of factors including the specific inorganic material and polymer used to form the composite as well as its desired properties. Typical amounts can range from 0.001 to 90 weight percent of the inorganic filler based on the weight of the total composite. Generally, the composite comprises at least about 0.1, preferably about 1, more preferably about 2, and most preferably about 4 weight percent and less than about 80 , preferably about 60, more preferably about 50 weight percent of the inorganic filler based on the total weight of the composite.

Optionally, the inorganic fillers used in the practice of this invention may contain various other additives such as dispersing agents, antistatic agents, colorants, mold release agents or pigments. The optional additives and their amount employed are dependent on a variety of factors including the desired end use properties.

Optionally, the polymer composites of the present invention may contain various other additives such as nucleating agents, lubricants, plasticizers, chain extenders, colorants, mold release agents, antistatic agents, pigments, or fire retardants. The optional additives and their amounts employed are dependent on a variety of factors including the desired end-use properties.

The polymer composites of this invention exhibit useful properties, such as increased barrier properties to oxygen, water vapor and carbon dioxide. Increases in tensile strength are also observed. Improvements in one or more properties can be obtained even though small amounts of inorganic fillers are employed.

The properties of the polymer composites of the present invention may be further enhanced by post-treatment such as by heat-treating, orienting or annealing the composite at an elevated temperature, conventionally from 80°C to 230°C. Generally, the annealing temperatures will be more than 100°C, preferably more than 110°C, and more preferably more than 120°C, to less than 250°C, preferably less than 220°C, and more preferably less than 180°C.

The composites are used as hot-melt adhesives.

The following working examples are given to illustrate the invention and should not be construed as limiting its scope. Unless otherwise indicated, all parts and percentages are by weight.

### Example 1

Talc (purchased from the Aldrich Chemical Company) and poly(hydroxy amino ether) derived from bisphenol A diglycidyl ether and monoethanolamine henceforth referred to as PHAE resin were combined to yield varying volume percent talc/PHAE composites. The talc and PHAE resin were slowly added to a preheated Haake torque rheometer at low rpm to allow the resin to melt and equilibrate. After complete addition of the sample, the mixer was ramped to 120 rpm. The sample was melt-blended between 100°C and 250°C, between 5 and 60 minutes, between 20 and 200 rpm, more preferably 170°C and 120 rpm, for approximately 10 minutes. After blending, the sample was removed and pressed into films using compression molding.

The samples were then tested for oxygen barrier properties according to ASTM D3985-81. Oxygen concentration was 100 percent.

The oxygen barrier properties of the samples containing the talc filler were vastly improved over that of the pure PHAE resin under the same test conditions. The values are listed in Table I for the blank PHAE resin and four different volume percent loading of talc. The test conditions were 23.7°C, relative humidity of 52 percent at an oxygen concentration of 100 percent.

**Table I**

| Volume % Talc | Oxygen Transmission Rate (cc-mil/100 in²-day-atm O₂) | Oxygen Transmission Rate (cc-mm/m²-day-atm O₂) |
|---|---|---|
| 0 | 0.773, 0.771 | 0.305, 0.304 |
| 5 | 0.441, 0.461 | 0.174, 0.182 |
| 10 | 0.260, 0.256 | 0.102, 0.101 |
| 15 | 0.114, 0.146 | 0.045, 0.058 |
| 20 | 0.103, 0.101 | 0.0406, 0.0398 |

### Example 2

The composites described in Example 1 of varying volume percent talc were tested to determine the water vapor transmission rate, (gm-mm/m²-day), using ASTM F1249-90 at 37.9°C and 100 percent relative humidity. A significant improvement was obtained compared to the pure PHAE resin. The results are shown in Table II.

**Table II**

| Volume % Talc | Water Vapor Transmission Rate (gm-mil/100in²-day), | Water Vapor Transmission Rate (gm-cm/m²-day), |
|---|---|---|
| 0 | 5.77, 6.05 | 227.338, 238.37 |
| 5 | 5.04, 4.86 | 198.576, 191.484 |
| 10 | 3.39,3.58 | 133.566, 141.052 |
| 15 | 2.96, 2.47 | 116.624, 97.318 |
| 20 | 3.56, 3.57 | 140.264, 140.658 |

### Example 3

Composites were prepared as described in Example 1 using talc obtained from Specialty Minerals, Inc. of Barretts, Montana. The composites of varying volume percent were prepared using the talc. The oxygen transmission rates are shown in Table III.

**Table III**

| Volume % Talc | Oxygen Transmission Rate (cc-mil/100 in²-day-atm O₂) | Oxygen Transmission Rate (cc-mm/m²-day-atm O₂) |
|---|---|---|
| 10% | 0.191, 0.257 | 0.075, 0.101 |
| 15% | 0.073, 0.051 | 0.029, 0.020 |
| 20% | 0.052, 0.025 | 0.020, 0.010 |
| 10% | 0.187,0.147 | 0.074, 0.058 |
| 15% | 0.010, 0.055 | 0.004, 0.022 |

The talc/PHAE resin composites were also tested for oxygen transmission rate at high relative humidity and compared to the blank PHAE resin. The results are shown in Table IV.

**Table IV**

| Volume % Talc | % Relative Humidity | Oxygen Transmission Rate (cc-mil/100 in²-day-atm O₂) | Oxygen Transmission Rate (cc-mm/m²-day-atm O₂) |
|---|---|---|---|
| 10% | 86 | 0.460, 0.465 | 0.181, 0.183 |
| 15% | 84 | 0.341, 0.354 | 0.134, 0.139 |
| 0% | 91 | 0.938, 0.982 | 0.370, 0.387 |

### Example 4

PHAE resin was blended with mica (obtained from Franklin Industrial Minerals) as described in Example 1, at 10 and 20 volume percent. The oxygen transmission rates obtained at 23°C and 60 percent relative humidity are listed in Table V. Additional data were obtained at high relative humidity for the 10 and 15 volume percent mica/PHAE composites.

**Table V**

| Volume % Mica | % Relative Humidity | Oxygen Transmission (cc-mil/100 in²-day-atm O₂) | Oxygen Transmission Rate (cc-mm/m²-day-atm O₂) |
|---|---|---|---|
| 10 | 60 | 0.139, 0.146 | 0.055, 0.058 |
| 20 | 60 | 0.110, 0.104 | 0.043, 0.041 |
| 10 | 85 | 0.291, 0.274 | 0.115, 0.108 |
| 15 | 84 | 0.167, 0.147 | 0.066, 0.058 |

### Example 5

SCAN (silica coated aluminum nitride) provided by The Dow Chemical Company and calcium carbonate OMYACARB 5 provided by Omya Inc. were blended as described in Example 1 with PHAE resin at varying volume percent resulting in different PHAE composites. Table VI contains the oxygen transmission rate data for the different composites.

**Table VI**

| Volume % Filler | Oxygen Transmission (cc-mil/100 in²-day-atm O₂) | Oxygen Transmission Rate (cc-mm/m²-day-atm O₂) |
|---|---|---|
| 5% SCAN | 0.710, 0.691 | 0.280, 0.272 |
| 10% SCAN | 0.631, 0.662 | 0.249, 0.261 |
| 20% SCAN | 0.460, 0.538 | 0.181, 0.212 |
| 10% CaCO₃ | 0.759, 0.767 | 0.299, 0.302 |
| 20% CaCO₃ | 0.589, 0.608 | 0.232, 0.240 |

The microtensile properties of the 20 volume percent composites were tested. The results are shown in Table VII.

**Table VII**

| Composite | Tensile Modulus | % Strain at Break | Tensile Break | Tensile Yield |
|---|---|---|---|---|
| 20% SCAN | 768.5 kpsi (5,299 kPa) | 10.25 | 6.382 kpsi (44 kPa) | 8.472 kpsi (68.41 kPa) |
| 20% CaCO₃ | 896.4 kpsi (6180 kPa) | 4.07 | 7.914 kpsi (54.56 kPa) | * |

| | | | | |
|---|---|---|---|---|
| * not determined | | | | |

### Example 6

Talc (purchased from the Aldrich Chemical Company) and hydroxy-functionalized polyether, PHE, (formed by the reaction of an epihalohydrin or a diglycidyl ether with a bisphenol) were combined to yield varying volume percent talc/PHE composites. The PHE was provided by PAPHEN® Phenoxy Resins as PKHH®. The talc and PKHH resin were blended in the manner described in Example 1. After complete addition of the sample, the mixer was ramped to 120 rpm. The sample was melt-blended at approximately 170°C, 120 rpm for approximately 10 minutes. After blending, the sample was removed and pressed into films using compression molding.

The samples were tested for oxygen barrier properties according to ASTM D3985-81. Oxygen concentration was 100 percent.

The oxygen barrier property of the samples containing the talc filler were vastly improved over that of the pure PKHH resin under the same test conditions. Calcium carbonate and SCAN composites were prepared and tested for oxygen barrier properties. The results are shown in Table VIII.

**Table VIII**

| Volume % Filler | Oxygen Transmission Rate (cc-mil/100 in²-day-atm O₂) | Oxygen Transmission Rate (cc-mm/m²-day-atm O₂) |
|---|---|---|
| 0% Filler | 6.094, 6.015 | 2.401, 2.370 |
| 10% Talc | 3.743, 3.755 | 1.475, 1.479 |
| 20% Talc | 2.356, 2.401 | 0.928, 0.946 |
| 10% CaCO₃ | 5.890, 5.840 | 2.321, 2.301 |
| 20% CaCO₃ | 4.337* | 1.709 |
| 10% SCAN | 5.770,5.816 | 2.273, 2.292 |

| | | |
|---|---|---|
| *Only one sample tested. | | |

The microtensile properties of the 20 volume percent filler/PKHH composites were tested. The results are shown in Table IX.

**Table IX**

| Composite | Tensile Modulus | % Strain at Break | Tensile Break | Tensile Yield |
|---|---|---|---|---|
| 20% Talc | 1,080.0 kpsi (7,400 kPa) | 3.32' | 9.394 kpsi (64.77 kPa) | * |
| 20% SCAN | 781.3 kpsi (5,387kPa) | 12.75 | 7.148 kpsi (49.28 kPa) | 9.138 kpsi (62.99 kPa) |
| 20% CaCO₃ | 731.2 kpsi (5041 kPa) | 2.65 | 8.886 kpsi (61.27 kPa) | * |

| | | | | |
|---|---|---|---|---|
| * not determined | | | | |

## Claims

1. The use in a hot-melt adhesive of a polymer composite comprising an inorganic filler and a hydroxy-functionalized polyether, wherein the hydroxy-functionalized polyether is:
(I) a hydroxy-functionalized polyether of the formula: 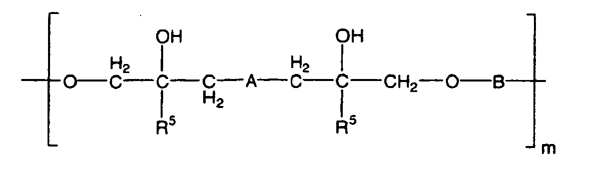 wherein A is an amine moiety or a combination of different amine moieties; B is a divalent organic moiety which is hydrocarbylene; R⁵ is alkyl or hydrogen; and m is an integer from 5 to 1000;
or
(II) a hydroxy-functionalized polyether of the formula: 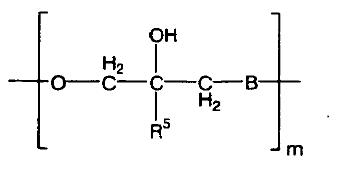
wherein B is a divalent organic moiety which is hydrocarbon; R⁵ is alkyl or hydrogen; and m is an integer from 5 to 1000.

2. The use of Claim 1 wherein the inorganic filler is an inorganic oxide, hydroxide, carbonate, nitride, carbide, boride or mixture thereof.

3. The use of Claim 1 wherein the polymer comprises the hydroxy-functionalized polyether of Formula I wherein A is 2-hydroxyethylimino-, 2-hydroxypropylimino-, piperazenyl, or N,N'-bis(2-hydroxyethyl)-1,2-ethylenediimino-, and B is isopropylidenediphenylene, 1,3-phenylene, or 1,4-phenylene and R⁵ is hydrogen.

4. The use of Claim 1 wherein the polymer comprises the hydroxy-functionalized polyether of Formula I wherein the hydroxy-functionalized polyether is formed by the reaction product of a diglycidyl ether or an epihalohydrin with a difunctional amine.

5. The use of Claim 1 wherein the polymer comprises the hydroxy-functionalized polyether of formula II wherein B is 1,3-phenylene, 1,4-phenylene, sulfonyldiphenylene, oxydiphenylene, thiodiphenylene, or isopropylidenediphenylene and R⁵ is hydrogen.

6. The use of Claim 1 wherein the polymer comprises the hydroxy-functionalized polyether of Formula II wherein the hydroxy-functionalized polyether is formed by the reaction product of an epihalohydrin or a diglycidyl ether with a bisphenol.

7. The use of Claim 1 wherein the inorganic filler is talc, mica, montmorillonite, hectorite, kaolinite, dickite, nacrite, halloysite, saponite, nontronite, beidellite, volhonskoite, sauconite, magadiite, medmontite, kenyaite, vermiculite, serpentine, chlorite, palygorskite, kuleite, aliettite, sepiolite, allophane, imogolite or a mixture thereof.

8. The use of Claim 7 wherein the inorganic filler is talc, mica, montmorillonite, hectorite or a mixture thereof.

9. The use of Claim 1 wherein the inorganic filler is a metal oxide, metal hydroxide, metal carbonate, mixed metal oxide, mixed metal hydroxide, mixed metal carbonate or a mixture thereof.

10. The use of Claim 1 wherein the inorganic filler is calcium oxide, magnesium oxide, zirconium oxide, titanium oxide, manganese oxide, iron oxide, aluminium oxide, calcium hydroxide, magnesium hydroxide, zirconium hydroxide, aluminium hydroxide, manganese hydroxide, iron hydroxide, calcium carbonate, magnesium carbonate, manganese carbonate, iron carbonate or zirconium carbonate.

11. The use of Claim 10 wherein the inorganic filler is calcium carbonate, calcium oxide, calcium hydroxide or a mixture thereof.

12. The use of Claim 1 wherein the inorganic filler is a metal nitride, metal carbide, or metal boride or a mixture thereof.

13. The use of Claim 1 wherein the filler is aluminium nitride, silicon nitride, iron nitride, silicon carbide, manganese carbide, iron carbide, iron boride, aluminium boride or manganese boride or a mixture thereof.

14. The use of Claim 13 wherein the aluminium nitride is silica-coated aluminium nitride.

15. The use of Claim 1 wherein the inorganic filler is at least 0.1 weight percent and not more than 90 weight percent of the final composite.

16. The use of Claim 1 wherein the polymer composite is formed by adding the inorganic filler to one or more of the monomers forming the hydroxy-functionalized polyether matrix and then polymerizing the monomers.

## Patentansprüche

1. Verwendung eines Polymerverbundstoffs aus einem anorganischen Füllstoff und einem hydroxyfunktionalisierten Polyether in einem Schmelzklebstoff, wobei es sich bei dem hydroxyfunktionalisierten Polyether um Folgendes handelt:
(I) einen hydroxyfunktionalisierten Polyether der Formel: 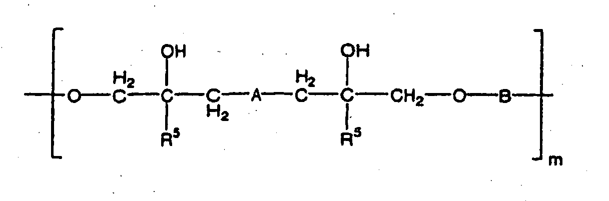 in der A eine Aminkomponente oder eine Kombination verschiedener Aminkomponenten ist; B eine zweiwertige organische Komponente ist, bei der es sich um Hydrocarbylen handelt; R⁵ Alkyl oder Wasserstoff ist; und m eine ganze Zahl von 5 bis 1000 ist;
oder
(II) einen hydroxyfunktionalisierten Polyether der Formel: 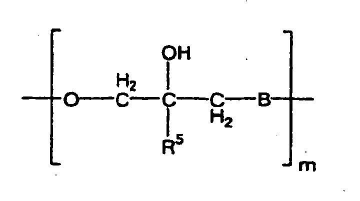 in der B eine zweiwertige organische Komponente ist, bei der es sich um Kohlenwasserstoff handelt; R⁵ Alkyl oder Wasserstoff ist; und m eine ganze Zahl von 5 bis 1000 ist.

2. Verwendung nach Anspruch 1, wobei der anorganische Füllstoff ein anorganisches Oxid, Hydroxid, Carbonat, Nitrid, Carbid, Borid oder eine Mischung davon ist.

3. Verwendung nach Anspruch 1, wobei das Polymer den hydroxyfunktionalisierten Polyether der Formel I umfasst, in der A 2-Hydroxyethylimino-, 2-Hydroxypropylimino-, Piperazenyl oder N,N'-bis(2-hydroxyethyl)-1,2-ethylendiimino- ist und B Isopropylidendiphenylen, 1,3-Phenylen oder 1,4-Phenylen ist und R⁵ Wasserstoff ist.

4. Verwendung nach Anspruch 1, wobei das Polymer den hydroxyfunktionalisierten Polyether der Formel I umfasst, wobei der hydroxyfunktionalisierte Polyether durch das Reaktionsprodukt eines Diglycidylethers oder eines Epihalogenhydrins mit einem difunktionellen Amin gebildet ist.

5. Verwendung nach Anspruch 1, wobei das Polymer den hydroxyfunktionalisierten Polyether der Formel II umfasst, in der B 1,3-Phenylen, 1,4-Phenylen, Sulfonyldiphenylen, Oxydiphenylen, Thiodiphenylen oder Isopropylidendiphenylen ist und R⁵ Wasserstoff ist.

6. Verwendung nach Anspruch 1, wobei das Polymer den hydroxyfunktionalisierten Polyether der Formel II umfasst, wobei der hydroxyfunktionalisierte Polyether durch das Reaktionsprodukt eines Epihalogenhydrins oder eines Diglycidylethers mit einem Bisphenol gebildet ist.

7. Verwendung nach Anspruch 1, wobei der anorganische Füllstoff Talk, Glimmer, Montmorillonit, Hectorit, Kaolinit, Dickit, Nakrit, Halloysit, Saponit, Nontronit, Beidellit, Volhonskoit, Sauconit, Magadiit, Medmontit, Kenyait, Vermiculit, Serpentin, Chlorit, Palygorskit, Kuleit, Aliettit, Sepiolit, Allophan, Imogolit oder eine Mischung davon ist.

8. Verwendung nach Anspruch 7, wobei der anorganische Füllstoff Talk, Glimmer, Montmorillonit, Hectorit oder eine Mischung davon ist.

9. Verwendung nach Anspruch 1, wobei der anorganische Füllstoff ein Metalloxid, Metallhydroxid, Metallcarbonat, Mischmetalloxid, Mischmetallhydroxid, Mischmetallcarbonat oder eine Mischung davon ist.

10. Verwendung nach Anspruch 1, wobei der anorganische Füllstoff Calciumoxid, Magnesiumoxid, Zirconiumdioxid, Titanoxid, Manganoxid, Eisenoxid, Aluminiumoxid, Calciumhydroxid, Magnesiumhydroxid, Zirconiumhydroxid, Aluminiumhydroxid, Manganhydroxid, Eisenhydroxid, Calciumcarbonat, Magnesiumcarbonat, Mangancarbonat, Eisencarbonat oder Zirconiumcarbonat ist.

11. Verwendung nach Anspruch 10, wobei der anorganische Füllstoff Calciumcarbonat, Calciumoxid, Calciumhydroxid oder eine Mischung davon ist.

12. Verwendung nach Anspruch 1, wobei der anorganische Füllstoff ein Metallnitrid, Metallcarbid oder Metallborid oder eine Mischung davon ist.

13. Verwendung nach Anspruch 1, wobei der Füllstoff Aluminiumnitrid, Siliciumnitrid, Eisennitrid, Siliciumcarbid, Mangancarbid, Eisencarbid, Eisenborid, Aluminiumborid oder Manganborid oder eine Mischung davon ist.

14. Verwendung nach Anspruch 13, wobei das Aluminiumnitrid ein mit Siliciumdioxid beschichtetes Aluminiumnitrid ist.

15. Verwendung nach Anspruch 1, wobei der anorganische Füllstoff mindestens 0,1 Gew.-% und nicht mehr als 90 Gew.-% des fertigen Verbundstoffs ausmacht.

16. Verwendung nach Anspruch 1, wobei der Polymerverbundstoff gebildet wird durch Zugabe des anorganischen Füllstoffs zu einem oder mehreren der die hydroxyfunktionalisierte Polyethermatrix bildenden Monomere und dann durch Polymerisieren der Monomere.

## Revendications

1. Utilisation, au sein d'un adhésif thermofusible, d'un composite polymère comprenant une charge inorganique et un polyéther portant un ou plusieurs groupes fonctionnels hydroxyle, lequel polyéther portant un ou plusieurs groupes fonctionnels hydroxyle représente
(I) un polyéther portant un ou plusieurs groupes fonctionnels hydroxyle de formule 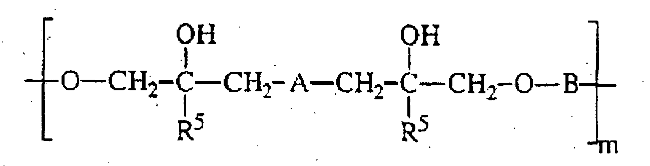 dans laquelle,
A représente un fragment de type amine ou une combinaison de différents fragments de type amine ;
B est un fragment organique divalent qui représente un groupe hydrocarbylène ;
R⁵ représente un groupe alkyle ou un atome d'hydrogène ;
et m représente un nombre entier valant de 5 à 1000 ;
ou
(II) un polyéther portant un ou plusieurs groupes fonctionnels hydroxyle de formule 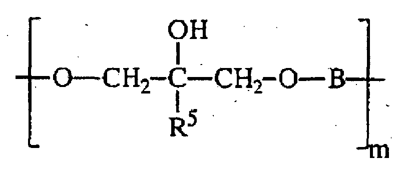 dans laquelle,
B est un fragment organique divalent qui représente un groupe hydrocarboné, et R⁵ représente un groupe alkyle ou un atome d'hydrogène ;
et m représente un nombre entier valant de 5 à 1000.

2. Utilisation selon la revendication 1, dans laquelle la charge inorganique_ représente un oxyde inorganique, un hydroxyde inorganique, un carbonate inorganique, un nitrure inorganique, un carbure inorganique, un borure inorganique ou un mélange de telles substances.

3. Utilisation selon la revendication 1, dans laquelle le polymère comporte le polyéther portant un ou plusieurs groupes fonctionnels hydroxyle de formule I dans laquelle A représente un groupe 2-hydroxyéthylimino-, un groupe 2-hydroxypropylimino-, un groupe pipérazényle ou un groupe N,N'-bis(2-hydroxyéthyl)-1,2-éthylènedimino-, B représente un groupe isopropylidène-diphénylène, un groupe 1,3-phénylène ou un groupe 1,4,-phénylène et R⁵ représente un atome d'hydrogène.

4. Utilisation selon la revendication 1, dans laquelle le polymère comporte le polyéther portant un ou plusieurs groupes fonctionnels hydroxyle de formule I, lequel polyéther portant un ou plusieurs groupes fonctionnels hydroxyle est formé par le fait de mettre à réagir un éther diglycidylique ou une épihalohydrine avec une amine bifonctionnelle.

5. Utilisation selon la revendication 1, dans laquelle le polymère comporte le polyéther portant un ou plusieurs groupes fonctionnels hydroxyle de formule II dans laquelle B représente un groupe 1,3-phénylène, un groupe 1,4,-phénylène, un groupe sulfonyldiphénylène, un groupe oxydiphénylène, un groupe thiodiphénylène ou un groupe isopropylidène-diphénylène et R⁵ représente un atome d'hydrogène.

6. Utilisation selon la revendication 1, dans laquelle le polymère comporte le polyéther portant un ou plusieurs groupes fonctionnels hydroxyle de formule II dans laquelle le polyéther portant un ou plusieurs groupes fonctionnels hydroxyle est formé par le fait de mettre à réagir une épihalohydrine ou un éther diglycidylique avec un bisphénol.

7. Utilisation selon la revendication 1, dans laquelle la charge inorganique représente du talc, du mica, de la montmorillonite, de l'hectorite, de la kaolinite, de la dickite, de la nacrite, de l'halloysite, de la saponite, de la nontronite, de la beidellite, de la volhonskoite, de la sauconite, de la magadiite, de la medmontite, de la kenyaite, de la vermiculite, de la serpentine, de la chlorite, de la palygorskite, de la kulkeite, de l'aliettite, de la sépiolite, de l'allophane, de l'imogolite ou un mélange de telles substances.

8. Utilisation selon la revendication 7, dans laquelle la charge inorganique représente du talc, du mica, de la montmorillonite, de l'hectorite ou un mélange de telles substances.

9. Utilisation selon la revendication 1, dans laquelle la charge inorganique représente un oxyde métallique, un hydroxyde métallique, un carbonate métallique, un oxyde métallique mixte, un hydroxyde métallique mixte, un carbonate métallique mixte ou un mélange de telles substances.

10. Utilisation selon la revendication 1, dans laquelle la charge inorganique représente de l'oxyde de calcium, de l'oxyde de magnésium, de l'oxyde de zirconium, de l'oxyde de titane, de l'oxyde de manganèse, de l'oxyde de fer, de l'oxyde d'aluminium, de l'hydroxyde de calcium, de l'hydroxyde de magnésium, de l'hydroxyde de zirconium, de l'hydroxyde d'aluminium, de l'hydroxyde de manganèse, de l'hydroxyde de fer, du carbonate de calcium, du carbonate de magnésium, du carbonate de manganèse, du carbonate de fer ou du carbonate de zirconium.

11. Utilisation selon la revendication 10, dans laquelle la charge inorganique représente du carbonate de calcium, de l'oxyde de calcium, de l'hydroxyde de calcium ou un mélange de telles substances.

12. Utilisation selon la revendication 1, dans laquelle la charge inorganique représente un nitrure métallique, un carbure métallique, ou un borure métallique ou un mélange de telles substances.

13. Utilisation selon la revendication 1, dans laquelle la charge inorganique représente du nitrure d'aluminium, du nitrure de silicium, du nitrure de fer, du carbure de silicium, du carbure de manganèse, du carbure de fer, du borure de fer, du borure d'aluminium ou du borure de manganèse ou un mélange de telles substances.

14. Utilisation de la revendication 13, dans laquelle le nitrure d'aluminium représente du nitrure d'aluminium revêtu de silice.

15. Utilisation selon la revendication 1, dans laquelle la charge inorganique représente au moins 0,1 % en poids et pas plus de 90 % en poids du composite final.

16. Utilisation selon la revendication 1, dans laquelle le composite polymère est formé par le fait d'ajouter la charge inorganique à un ou plusieurs monomères constituant la matrice du polyéther portant un ou plusieurs groupes fonctionnels hydroxyle, puis d'effectuer la polymérisation des monomères.
